# EUROPÄISCHE PATENTSCHRIFT

(11) **EP 3 057 811 B1**
(45) Veröffentlichungstag und Bekanntmachung des Hinweises auf die Patenterteilung: **29.05.2019**
(21) Anmeldenummer: 14781247.3
(22) Anmeldetag: 08.10.2014
(51) Int. Cl.: B60C 23/04

(54) **BEFESTIGUNGSVORRICHTUNG ZUM BEFESTIGEN EINES MESSDRUCKSENSORS, INSBESONDERE REIFENDRUCKSENSORS**
FASTENING DEVICE FOR FASTENING A MEASURING PRESSURE SENSOR, IN PARTICULAR TYRE PRESSURE SENSOR
DISPOSITIF DE FIXATION POUR FIXER UN CAPTEUR DE PRESSION, EN PARTICULIER UN CAPTEUR DE PRESSION DE PNEU

(30) Priorität: 18.10.2013 DE 102013221225
(43) Veröffentlichungstag der Anmeldung: 24.08.2016
(73) Patentinhaber: Alligator Ventilfabrik GmbH, 89537 Giengen (DE)
(72) Erfinder: SCHWÄMMLEIN, Michael, 76571 Gaggenau (DE); MARKERT, Christian, 89542 Herbrechtingen (DE)
(74) Vertreter: Dr. Weitzel & Partner
(86) Internationale Anmeldenummer: PCT/EP2014/071558
(87) Internationale Veröffentlichungsnummer: WO 2015/055479

(56) Entgegenhaltungen:
- DE-A1- 19 529 289
- DE-U1-202010 016 960
- JP-A- H09 136 517
- JP-U- S5 967 307
- US-A1- 2012 291 933

## Beschreibung

Die vorliegende Erfindung betrifft eine Befestigungsvorrichtung mit einem Reifendrucksensor zum Befestigen innerhalb eines Reifenhohlraumes an einer Fahrzeugfelge gemäß dem Oberbegriff von Anspruch 1.

Reifendrucksensoren werden innerhalb des Reifenhohlraumes am Reifen oder an einer Fahrzeugfelge befestigt, um im Betrieb des Fahrzeugs den Luftdruck im Reifen bzw. Reifenhohlraum fortlaufend oder in Intervallen zu erfassen. Der mit dem Reifendrucksensor erfasste Luftdruck wird mittels einer im Reifendrucksensor integrierten Sendeeinrichtung an einen Empfänger im Fahrzeug gesendet und ausgewertet, sodass bei einem unzulässigen Druckabfall eine Warnmeldung ausgegeben werden kann.

Herkömmlich erfolgt eine Befestigung eines entsprechenden Reifendrucksensors an der Felge entweder durch einen mechanischen, vorteilhaft gelenkigen Anschluss des Reifendrucksensors am inneren Ende des Reifenventils. Nachteilig ist, dass hierfür Sonderkonstruktionen der Ventile notwendig sind und aufgrund der Positionierung außerhalb des so genannten Tiefbetts der Felge die Gefahr besteht, dass der Reifendrucksensor beim Ab- oder Aufziehen des Reifens von der oder auf die Felge beschädigt wird. Ein Beispiel für einen solchen am Reifenventil befestigten Reifendrucksensor wird in der EP 0 751 017 A2 offenbart.

DE 10 2006 038 059 A9 beschreibt die Befestigung eines Reifendrucksensors an einer Kraftfahrzeugfelge mittels eines Klebestreifens. Hierfür wird ein Sockel mittels des Klebestreifens von außen im Tiefbett der Felge angeklebt. Auf dem Sockel kann dann der Reifendrucksensor befestigt werden. Zur Sicherung kann ein Verzurrgurt über der Felge durch den Sockel geführt werden, der mit einem Gurtschloss, das als Einweg- oder Mehrwegartikel ausgeführt sein kann, über dem Umfang der Felge verschlossen ist. Als Gurtschloss kommt beispielsweise ein Crimpschloss oder ein Versenkschloss oder auch ein Schneckengetriebeverschluss in Betracht. Der Klebestreifen ist in der Regel ein doppelseitiges Klebeband. Somit erfolgt die primäre Befestigung des Reifendrucksensors mit dem Klebeband, was zuverlässig verhindert, dass sich der Reifendrucksensor auf der Felge verschiebt. Starke Fliehkräfte, welche den Sockel vom Klebeband oder das Klebeband von der Felge lösen könnten, werden durch den Gurt kompensiert.

Einen hiervon abweichenden Ansatz beschreibt die DE 10 2010 037 597 A1. Gemäß der dort dargestellten Befestigungsvorrichtung zum Befestigen eines Reifenmoduls, insbesondere Luftdrucksensors, für Reifen soll vermieden werden, dass das Reifenmodul an der Fahrzeugfelge anliegt. Vielmehr soll sich das Reifenmodul frei im Inneren des Reifenhohlraums positionieren, um die Qualität der gemessenen Temperatur der Luft im Reifenhohlraum dadurch zu verbessern, dass die gemessene Temperatur nicht durch die Temperatur der Fahrzeugfelge beeinflusst wird. Das Modul soll wärmetechnisch sowohl vom Reifen als auch von der Fahrzeugfelge abgekoppelt sein. Hierfür wird, ausgehend von Ansätzen, bei denen das Reifenmodul ohne Befestigung im Reifenhohlraum angeordnet ist, vorgeschlagen, das Reifenmodul frei beweglich an einem bandartigen Haltemittel anzuordnen, wobei das bandartige Haltemittel im Wesentlichen koaxial an der Fahrzeugfelge im Reifenhohlraum angeordnet ist, wodurch das Reifenmodul bei Rotation des Fahrzeugreifens zur Reifeninnenseite und von der äußeren Umfangsseite der Fahrzeugfelge beabstandet ist. Demgemäß wird das Reifenmodul weder an der Felge noch auf der Reifeninnenseite befestigt, beispielsweise über einen entsprechenden Klebeprozess. Das bandartige Haltemittel wird lose um die Fahrzeugfelge geschlungen und lose an ihr befestigt. Um ein abriebbeständiges, hochfestes, temperaturbeständiges und luftdurchlässiges Haltemittel zu erreichen, kann dieses aus einem Kunstfasermaterial bestehen. Die einander gegenüberliegenden Enden des bandartigen Haltemittels können bei der Montage an der Fahrzeugfelge mit einem Klettverschluss verbunden werden und das Reifenmodul kann in einer verschließbaren Tasche am bandartigen Haltemittel angeordnet sein.

Die vorliegende Erfindung betrifft ausschließlich eine Befestigungsvorrichtung mit einem Reifendrucksensor innerhalb eines Reifenhohlraums an einer Fahrzeugfelge, bei welchem der Reifendrucksensor fest an der Oberfläche der Fahrzeugfelge verspannt wird, da bei einer optional vorgesehenen Temperaturmessung gerade die Felgentemperatur mit berücksichtigt werden soll. Gegenüber dem Stand der Technik mit Crimp- Versenk- oder Schneckengetriebegurtschlössern und mit in der Regel aus Metall hergestellten Gurtbändern, wobei die primäre Befestigung des Reifendrucksensors durch Kleben an der Felge erfolgt, soll die Montage jedoch schneller und komfortabler sowie felgenschonender erfolgen können und besonders große Durchmesserbereiche verschiedener Felgen sollen mit einer einzigen Befestigungsvorrichtung abgedeckt werden können. Zugleich sollen die eingangs genannten Nachteile, die bei Befestigungen von Reifendrucksensoren an Ventilen vorherrschen, vermieden werden.

Zum allgemeinen Stand der Technik wird verwiesen auf DE 20 2010 016 960 U1. In diesem Dokument wird ein Elektrokardiogramm-Signalsensor mit einem Taillengurt offenbart. Befestigungsvorrichtungen für Reifendrucksensoren werden in JP S59 67307 U und JP H09 136517 A offenbart.

Der vorliegenden Erfindung liegt daher die Aufgabe zugrunde, eine Befestigungsvorrichtung mit einem Reifendrucksensor innerhalb eines Reifenhohlraumes an einer Fahrzeugfelge anzugeben, die an Felgen verschiedener Felgendurchmesser und Gestaltungen universell verwendbar ist und sowohl bei der Erstinstallation durch Fahrzeughersteller als auch beim Nachrüsten in Werkstätten komfortabel verwendet werden kann.

Die erfindungsgemäße Aufgabe wird durch eine Befestigungsvorrichtung mit den Merkmalen von Anspruch 1 gelöst. In den abhängigen Ansprüchen sind vorteilhafte und besonders zweckmäßige Ausgestaltungen der Erfindung angegeben.

Eine erfindungsgemäße Befestigungsvorrichtung mit einem Reifendrucksensor innerhalb eines Reifenhohlraumes an einer Fahrzeugfelge, insbesondere Nutzkraftfahrzeugfelge beispielsweise für einen LKW, umfasst einen bandförmigen Spanngurt, der eine Aufnahmeeinrichtung für den Messsensor oder Reifendrucksensor trägt. Der Spanngurt und die Aufnahmeeinrichtung sind zum ortsfesten Halten und Verspannen des Sensors an der Oberfläche der Fahrzeugfelge ausgeführt. Insbesondere ist keine weitere Befestigungsvorrichtung wie Klebestreifen oder dergleichen erforderlich, sondern der Sensor wird allein durch den Spanngurt an der Felge gehalten. Erfindungsgemäß weist der Spanngurt an einem ersten seiner beiden Enden eine Öse zum Durchführen des zweiten, dem ersten Ende entgegengesetzten Endes auf. Die Öse kann insbesondere aus Kunststoff, wie einem Hartplastik, hergestellt sein und bei einer besonders kostengünstigen Ausführungsform einfach die Form eines über dem Umfang geschlossenen Rings, insbesondere mit zwei parallel zueinander positionierten linearen Abschnitten, die beidseits über Bögen miteinander verbunden sind, aufweisen.

Ferner weist der Spanngurt im Bereich seines zweiten Endes, das heißt entfernt vom ersten Ende, zwei Textilfelder auf, die ausgehend vom zweiten Ende in Längsrichtung des Gurtes hintereinander auf seiner Oberfläche positioniert sind. Vorteilhaft sind die Textilfelder getrennt vom Material des Spanngurtes hergestellt und anschließend auf diesem befestigt. Beispielsweise können die beiden Textilfelder auf der Oberfläche des Spanngurtes angenäht werden, insbesondere zur besonders kostengünstigen Herstellung ausschließlich mit jeweils zwei Längsnähten (je seitlich am Rand eine), die in Längsrichtung des Gurtes verlaufen. Erfindungsgemäß ist eines der beiden Textilfelder mit Widerhaken versehen und das andere ist mit Schlaufen versehen, damit die beiden Textilfelder aufeinandergelegt werden können und gemeinsam einen Klettverschluss ausbilden. Aufgrund der Positionierung beider Textilfelder nebeneinander auf derselben Oberfläche des Spanngurtes muss das Aufeinanderlegen durch Umklappen des äußeren zweiten Endes des Spanngurtes, nachdem dieses durch die Öse gezogen wurde, auf den danebenliegenden Abschnitt des Spanngurtes mit dem ersten Textilfeld erfolgen.

Besonders vorteilhaft ist der Spanngurt aus einem textilen Bandmaterial, insbesondere aus oder mit Polyester und/oder Nylon hergestellt. Der Spanngurt kann beispielsweise durch Weben hergestellt sein.

Die Textilfelder können aus demselben oder einem andern Material als der Spanngurt hergestellt sein.

Zum Befestigen des Reifendrucksensors an der Fahrzeugfelge, insbesondere im Felgentiefbett, wird der Spanngurt um die Fahrzeugfelge herumgeschlungen, das zweite Ende des Spanngurtes durch die Öse geführt und über der Öse derart umgeklappt, dass das durch die Öse hindurchgeführte Ende auf den vom zweiten Ende des Spanngurts aus folgenden Abschnitt, der gerade nicht durch die Öse gezogen wurde, aufgelegt wird. Entsprechend sind beide Textilfelder vor dem Umklappen des Endes des Spanngurtes von der Oberfläche der Felge, auf welche der Spanngurt aufgespannt wird, abgewandt. Nach dem Umklappen ist das dem zweiten Ende näher gelegene Textilfeld, vorliegend als erstes Textilfeld bezeichnet, der Oberfläche der Felge, auf welche der Spanngurt aufgespannt ist, zugewandt, wobei ein Teil des zweiten Textilfeldes in der Regel nicht durch das erste Textilfeld abgedeckt wird. Da beim Aufziehen des Reifens auf die Felge, nachdem der Reifendrucksensor montiert wurde, meist Fett auf die Felge gestrichen wird, ist es günstig, wenn das zweite Textilfeld das Feld mit den Widerhaken und das erste Textilfeld das Feld mit den Schlaufen ist, da die Widerhaken unempfindlicher gegen Verschmutzung sind und die Schlaufen, aufgeklettet auf das zweite Textilfeld mit den Widerhaken, vor dem Fett geschützt sind.

Um zu erreichen, dass stets ein gewisser Abschnitt des zweiten Textilfeldes, wie dargelegt, über das erste Textilfeld im geschlossenen Zustand des Klettverschlusses übersteht, kann das zweite Textilfeld in Richtung der Längsachse des Spanngurtes eine größere Länge aufweisen als das erste Textilfeld. Das stellt sicher, dass sich das zweite Ende im verspannten Zustand des Spanngurtes nicht von der Felge bzw. vom Bereich des Spanngurtes, auf welchen es aufgelegt ist, abheben kann, wenn das Fahrzeugrad sich dreht. Ein solches Abheben könnte nämlich zu einer fortschreitenden Lösung des Klettverschlusses führen.

Die beiden Textilfelder können mit einem Abstand zueinander positioniert sein, insbesondere mit einem Abstand von 10 cm bis 20 cm. Dies ermöglicht, dass auch bei verschiedenen Felgendurchmessern die Öse innerhalb dieses Abstands positioniert ist und damit ein Verknicken eines der beiden Textilfelder beim Umklappen des Spanngurtendes über der Öse vermieden wird.

Bevorzugt ist die Aufnahmeeinrichtung für den Reifendrucksensor als textile Tasche ausgeführt. Die textile Tasche kann gemäß einer besonders vorteilhaften Ausführungsform den Messsensor vollständig umgeben und ist zumindest dann bei einem Reifendrucksensor aus einem luftdurchlässigen Material gebildet. Eine Ausführungsform sieht vor, dass die textile Tasche durch einen textilen Schlauch gebildet wird, welcher den Spanngurt über dessen Umfang umschließt. Mit anderen Worten, ist der Spanngurt durch die schlauchförmige textile Tasche hindurchgezogen. Wenigstens an einem Ende ist der Schlauch zur Ausbildung der textilen Tasche verschlossen, beispielsweise zugenäht. Eine andere Ausführungsform sieht vor, dass der textile Schlauch an beiden Enden beidseits des Messsensors zugenäht ist.

Besonders vorteilhaft wird die wenigstens eine Naht zum Verschließen wenigstens eines Endes des textilen Schlauches zugleich zur Befestigung des textilen Schlauches an dem Spanngurt verwendet, damit der textile Schlauch nicht an dem Spanngurt entlangrutschen kann. Beispielsweise ist der Spanngurt an seinem ersten Ende durch den Schlauch geführt und anschließend unter Bildung einer Schlaufe, in welcher die Öse aufgenommen ist, von außen auf den Schlauch umgeschlagen und dort auf dem Schlauch befestigt, vorteilhaft vernäht, wobei dann insbesondere diese Naht auch zum Verschließen des Schlauches an dem dem ersten Ende des Spanngurtes zugewandten Ende verwendet wird.

Der Spanngurt kann gemäß einer Ausführungsform der Erfindung allein durch Festzurren und der zwischen dem Material, insbesondere dem textilen Material des Spanngurtes und der Felgenoberfläche entstehenden Haftreibung gegen Rutschen auf der Felge fixiert sein. Eine alternative Ausführungsform sieht vor, dass der Spanngurt im Bereich seiner Mitte zwischen einerseits dem ersten Ende und andererseits dem Längenabschnitt zwischen den beiden Textilfeldern mit einem Antirutschelement auf der Oberfläche, die im bestimmungsgemäßen Gebrauch der Befestigungsvorrichtung der Felge zugewandt ist bzw. auf dieser aufgelegt ist, versehen ist. Bei einem solchen Antirutschelement kann es sich beispielsweise um ein Silikonpolster oder andere gummiartige Beschichtungen oder Einschlüsse im Spanngurt handeln. Die Positionierung des Antirutschelementes in dem Bereich hat den Vorteil, dass der im Durchmesser gegenüberliegende Bereich des Spanngurtes, beispielsweise die am ersten Ende befestigte schlauchförmige Tasche, den Messsensor aufnehmen kann und damit aufgrund der Fliehkräfte bei der Rotation der Felge, welche den vergleichsweise schweren Messsensor nach außen ziehen, das Antirutschelement auf die Oberfläche der Felge aufgepresst wird.

Die Aufnahmeeinrichtung für den Reifendrucksensor ist vorteilhaft im bestimmungsgemäßen Gebrauch der Befestigungsvorrichtung auf der der Felge zugewandten Seite des Spanngurtes positioniert, sodass der in der Aufnahmeeinrichtung aufgenommene Messsensor zwischen dem Spanngurt und der Felge eingeschlossen wird. Beispielsweise kann die Tasche, die im Inneren den Aufnahmeraum für den Messsensor aufweist, zwischen dem Spanngurt und der Oberfläche der Felge positioniert sein. Dies ist besonders günstig, wenn die Tasche als einseitig offener Schlauch ausgeführt ist, da durch das Verspannen des Spanngurtes ein Herausrutschen des Messsensors aus dem offenen Ende des Schlauches sicher vermieden wird.

Durch die Erfindung kann ein Reifendrucksensor ohne Werkzeug an einer Felge montiert werden. Eine leicht einstellbare Längenanpassung für unterschiedliche Felgenformen und Felgendurchmesser ist möglich. Der Sensor kann besonders vorteilhaft durch Formschluss gehalten werden. Durch die größtenteils konzentrische Gewichtsverteilung der Befestigungsvorrichtung wird die Radunwucht reduziert.

Die Befestigungsvorrichtung ist wiederverwendbar und insbesondere waschbar. Bei einer Ausführungsform der Befestigungsvorrichtung frei von metallischen Teilen besteht keine Korrosionsgefahr an der Felge. Insbesondere bei Verwendung eines textilen Bandmaterials für den Spanngurt und vorteilhaft eines textilen Materials für die Tasche zur Aufnahme des Messsensors wird die höchste elektromagnetische Verträglichkeit erzielt und chemische oder galvanische Wechselwirkungen mit dem Material der Fahrzeugfelge werden vermieden.

Die Breite des Spanngurtes beträgt vorteilhaft 20 bis 30 mm, insbesondere 25 mm. Vorteilhaft ist ein Verstellbereich von 150 mm oder mehr vorgesehen, sodass die meisten Felgentypen abgedeckt werden können.

Wenn die Aufnahmeeinrichtung als Tasche ausgeführt ist, kann diese aus einem anderen Material als der Spanngurt hergestellt sein. Die Tasche kann gemäß einer Ausführungsform breiter als der Spanngurt sein.

Die Erfindung soll nachfolgend anhand eines Ausführungsbeispiels und den Figuren exemplarisch erläutert werden.

Es zeigen:
- Figur 1: eine schematische Draufsicht auf eine erfindungsgemäße Befestigungsvorrichtung;
- Figur 2: eine seitliche Ansicht der erfindungsgemäßen Befestigungsvorrichtung aus der Figur 1 im Bereich der Aufnahmeeinrichtung für den Messsensor.

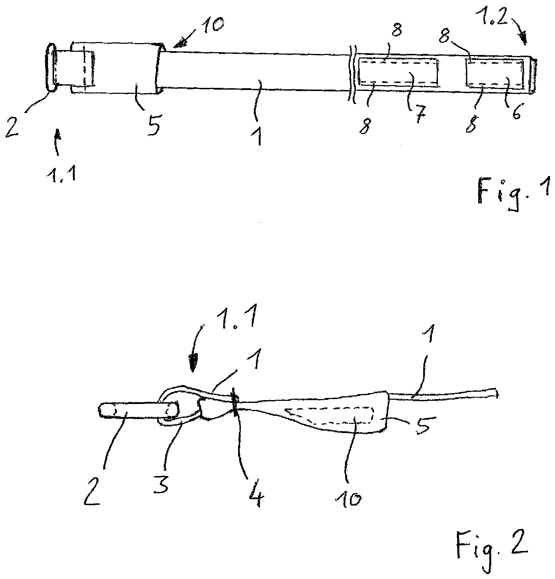

In der Figur 1 ist eine Draufsicht auf eine erfindungsgemäße Befestigungsvorrichtung mit einem bandförmigen Spanngurt 1 dargestellt, der an einem ersten Ende 1.1 eine Öse 2 trägt, durch die das zweite Ende 1.2 hindurchgezogen werden kann. Die Öse 2 ist, wie man aus der Figur 2 besser entnehmen kann, unverlierbar in einer Schlaufe 3 am ersten Ende des Spanngurtes 1 aufgenommen, wobei die Schlaufe 3 durch Umschlagen des Spanngurtes 1 an seinem ersten Ende 1.1 und durch Vernähen des umgeschlagenen Abschnitts auf dem benachbarten Abschnitt im Bereich des ersten Endes 1.1 gebildet wird, siehe die Naht 4. Mit der Naht 4 wird zugleich eine Aufnahmeeinrichtung 5 in Form einer schlauchförmigen Tasche gegen Verrutschen in Längsrichtung des Spanngurtes 1 an diesem befestigt. Zugleich ist ferner das erste Ende der Aufnahmeeinrichtung 5 durch diese Naht 4 verschlossen, wohingegen das zweite Ende als offenes Ende ausgeführt ist, durch welches der Messsensor 10, insbesondere Reifendrucksensor, in die Aufnahmeeinrichtung 5 eingeführt und aus dieser herausgenommen werden kann.

In der Figur 1 ist der Messsensor unterhalb des Spanngurtes 1 in der Aufnahmeeinrichtung 5 positioniert, sodass er beim Umschließen einer Fahrzeugfelge (nicht dargestellt) mit dem Spanngurt 1 zwischen dem Spanngurt 1, genauer einer ersten Oberfläche des Spanngurtes 1 und der Fahrzeugfelge positioniert ist.

Wie man in der Figur 1 erkennen kann, weist der Spanngurt 1 auf seiner zweiten im bestimmungsgemäßen Gebrauch bezüglich der Felge äußeren Oberfläche im Bereich seines zweiten Endes 1.2 zwei Textilfelder 6, 7 auf, nämlich ein erstes Textilfeld 6 und ein zweites Textilfeld 7. Das erste Textilfeld 6 ist unmittelbar am zweiten Ende 1.2 positioniert. Das zweite Textilfeld 7 ist mit Abstand neben dem ersten Textilfeld 6, aber immer noch im Bereich des zweiten Endes 1.2 des Spanngurtes 1 positioniert. Beide Textilfelder 6, 7 sind beispielsweise mit jeweils zwei Längsnähten 8 auf der Oberfläche des Spanngurtes 1 aufgenäht. Zusammen bilden die beiden Textilfelder 6, 7 einen Klettverschluss, wenn nämlich das zweite Ende 1.2 mit dem Abschnitt, der das erste Textilfeld 6 trägt, durch die Öse 2 gezogen wird und anschließend das erste Textilfeld 6 durch Umklappen des Spanngurtes 1 im Bereich des zweiten Endes 1.2 auf das zweite Textilfeld 7 aufgeklettet wird.

Vorteilhaft ist das erste Textilfeld 6 mit Schlaufen und das zweite Textilfeld 7 mit Häkchen versehen, um den genannten Klettverschluss auszubilden.

## Patentansprüche

1. Befestigungsvorrichtung mit einem Reifendrucksensor (10) zum Befestigen innerhalb eines Reifenhohlraumes an einer Fahrzeugfelge, insbesondere Nutzkraftfahrzeugfelge, umfassend
1.1 einen bandförmigen Spanngurt (1), der eine Aufnahmeeinrichtung (5) für den Reifendrucksensor (10) trägt; **dadurch gekennzeichnet, dass**
1.2 der Spanngurt (1) an einem ersten Ende (1.1) eine Öse (2) zum Durchführen eines zweiten, dem ersten Ende (1.1) entgegengesetzten Endes (1.2) aufweist, und
1.3 ausgehend vom zweiten Ende (1.2) und entfernt vom ersten Ende (1.1) auf der Oberfläche des Spanngurts (1) zwei Textilfelder (6, 7) in Längsrichtung des Spanngurts (1) hintereinander positioniert sind, von denen eines mit Widerhaken und das andere mit Schlaufen zum gemeinsamen Ausbilden eines Klettverschlusses nach dem Umklappen der Textilfelder (6, 7) aufeinander versehen ist.

2. Befestigungsvorrichtung gemäß Anspruch 1, **dadurch gekennzeichnet, dass** der Spanngurt (1) aus einem textilen Bandmaterial, insbesondere aus oder mit Polyester und/oder Nylon hergestellt ist, insbesondere durch Weben.

3. Befestigungsvorrichtung gemäß einem der Ansprüche 1 oder 2, **dadurch gekennzeichnet, dass** beginnend am zweiten Ende (1.2) das erste Textilfeld (6) mit Schlaufen und das zweite Textilfeld (7) mit Widerhaken versehen ist.

4. Befestigungsvorrichtung gemäß einem der Ansprüche 1 bis 3, **dadurch gekennzeichnet, dass** die beiden Textilfelder (6, 7) mit einem Abstand zueinander positioniert sind, insbesondere mit einem Abstand von 10 bis 20 Zentimeter.

5. Befestigungsvorrichtung gemäß einem der Ansprüche 1 bis 4, **dadurch gekennzeichnet, dass** die Öse (2) aus Kunststoff, insbesondere aus einem Hartplastik, hergestellt ist.

6. Befestigungsvorrichtung gemäß einem der Ansprüche 1 bis 5, **dadurch gekennzeichnet, dass** die Aufnahmeeinrichtung (5) als textile Tasche ausgeführt ist.

7. Befestigungsvorrichtung gemäß Anspruch 6, **dadurch gekennzeichnet, dass** die textile Tasche durch einen textilen Schlauch gebildet wird, von welchem der Spanngurt (1) über seinem Umfang umschlossen ist, wobei der Schlauch an nur einem Ende oder an beiden Enden insbesondere durch Nähen verschlossen ist.

8. Befestigungsvorrichtung gemäß Anspruch 7, **dadurch gekennzeichnet, dass** der Spanngurt (1) an seinem ersten Ende (1.1) durch den Schlauch geführt und anschließend durch Bildung einer Schlaufe (3), in welcher die Öse (2) unverlierbar aufgenommen ist, von außen auf den Schlauch umgeschlagen und dort an dem Schlauch befestigt, insbesondere vernäht ist.

9. Befestigungsvorrichtung gemäß den Ansprüchen 7 und 8, **dadurch gekennzeichnet, dass** der Schlauch an dem dem ersten Ende (1.1) des Spanngurtes zugewandten Ende durch eine Naht (4) verschlossen ist, die zugleich den Spanngurt (1) unter Bildung der Schlaufe (3) von außen auf dem Schlauch befestigt.

10. Befestigungsvorrichtung gemäß einem der Ansprüche 1 bis 9, **dadurch gekennzeichnet, dass** das vom zweite Ende (1.2) des Spanngurtes (1) aus gesehene zweite Textilfeld (7) eine größere Länge als das erste Textilfeld (6) aufweist.

11. Befestigungsvorrichtung gemäß einem der Ansprüche 1 bis 10, **dadurch gekennzeichnet, dass** der Spanngurt (1) im Bereich seiner Mitte zwischen einerseits dem ersten Ende (1.1) und andererseits dem Längsabschnitt zwischen den beiden Textilfeldern (6, 7) mit einem Antirutschelement auf der im bestimmungsgemäßen Gebrauch der Befestigungsvorrichtung der Felge zugewandten Oberfläche versehen ist.

12. Befestigungsvorrichtung gemäß einem der Ansprüche 7 bis 11, **dadurch gekennzeichnet, dass** die Tasche einen inneren Aufnahmeraum für den Reifendrucksensor (10) auf der im bestimmungsgemäßen Gebrauch der Befestigungsvorrichtung der Felge zugewandten Seite des Spanngurtes (1) aufweist.

## Claims

1. A fixing device with a tyre pressure sensor (10) for fixing inside a tyre cavity on a vehicle rim, in particular a utility vehicle rim, comprising
1.1 a band-shaped tension belt (1), which carries a receiving device (5) for the tyre pressure sensor (10);
**characterised in that**
1.2 the tension belt (1) contains at a first end (1.1) an eyelet (2) for threading a second end (1.2) opposite the first end (1.1), and
1.3 starting from the second end (1.2) and away from the first end (1.1) on the surface of the tension belt (1), two textile fields (6, 7) are positioned behind one another in the longitudinal direction of the tension belt (1), one of which is fitted with barbed hooks and the other with loops to form together a Velcro fastener after folding the textile fields (6, 7) together on top of each other.

2. The fixing device according to claim 1, **characterised in that** the tension belt (1) is made of a textile band material, in particular of or with polyester and/or nylon, in particular by weaving.

3. The fixing device according to one of the claims 1 or 2, **characterised in that** starting at the second end (1.2) the first textile field (6) is fitted with loops and the second textile field (7) is fitted with barbed hooks.

4. The fixing device according to one of the claims 1 to 3, **characterised in that** both textile fields (6, 7) are positioned at a distance from each other, in particular at a distance of 10 to 20 centimetres.

5. The fixing device according to one of the claims 1 to 4, **characterised in that** the eyelet (2) is made of synthetic material, in particular hard plastic.

6. The fixing device according to one of the claims 1 to 5, **characterised in that** the receiving device (5) is designed as a textile pocket.

7. The fixing device according to claim 6, **characterised in that** the textile pocket is formed by a textile hose which surrounds the tension belt (1) over its circumference, whereas the hose is closed only at one end or at both ends, in particular by sewing.

8. The fixing device according to claim 7, **characterised in that** the tension belt (1) is guided at its first end (1.1) through the hose and subsequently by forming a loop (3) in which the eyelet (2) is received in a captive manner, is turned over from the outside on the loop and then fixed, in particular sewed to the hose.

9. The fixing device according to claims 7 and 8, **characterised in that** the hose is closed at one end facing the first end (1.1) of the tension belt (1.1) by a seam (4), which at the same time fixes the tension belt (1) by forming the loop (3) from the outside on the hose.

10. The fixing device according to one of the claims 1 to 9, **characterised in that**, seen from the second end (1.2) of the tension belt (1), the second textile field (7) has a greater length than the first textile field (6).

11. The fixing device according to one of the claims 1 to 10, **characterised in that** the tension belt (1) is provided with a non-slip element on the surface facing the fixing device of the rim in the intended use, in the area of its middle between on the one hand the first end (1.1) and on the other hand the longitudinal section between both textile fields (6, 7).

12. The fixing device according to one of the claims 7 to 11, **characterised in that** the pocket has a first internal receiving chamber for the tyre pressure sensor (10) on the side of the tension belt (1) facing the fixing device of the rim in the intended use.

## Revendications

1. Dispositif de fixation avec un capteur de pression de pneu (10) à fixer à l'intérieur d'une cavité de pneu sur une jante de véhicule, en particulier une jante de véhicule utilitaire, comprenant
1.1 une courroie de tendeur (1) en forme de bande qui porte un dispositif de logement (5) pour le capteur de pression de pneu (10) ;
**caractérisé en ce que**
1.2 la courroie de tendeur (1) présente à une première extrémité (1.1) un oeillet (2) pour passer une deuxième extrémité (1.2) opposée à la première extrémité (1.1) et
1.3 deux panneaux de textile (6, 7) sont positionnés sur la surface de la courroie de tendeur (1) l'une derrière l'autre dans la longueur de la courroie de tendeur (1) à partir de la deuxième extrémité (1.2) et à distance de la première extrémité (1.1), dont l'un est muni de crochets et l'autre de boucles pour former ensemble une liaison à velours et crochet après que les panneaux de textile (6, 7) ont été rabattus l'un sur l'autre.

2. Dispositif de fixation selon la revendication 1, **caractérisé en ce que** la courroie de tendeur (1) se compose d'une bande de textile, en particulier en polyester et/ou en nylon, en particulier tissée.

3. Dispositif de fixation selon l'une des revendications 1 ou 2, **caractérisé en ce qu'**à partir de la deuxième extrémité (1.2), le premier panneau de textile (6) est muni de boucles et le deuxième panneau de textile (7) de crochets.

4. Dispositif de fixation selon l'une des revendications 1 à 3, **caractérisé en ce que** les deux panneaux de textile (6, 7) sont positionnés à distance l'un de l'autre, en particulier à une distance de 10 à 20 centimètres.

5. Dispositif de fixation selon l'une des revendications 1 à 4, **caractérisé en ce que** l'oeillet (2) est fait de matériau synthétique, en particulier d'un plastique dur.

6. Dispositif de fixation selon l'une des revendications 1 à 5, **caractérisé en ce que** le dispositif de logement (5) est réalisé comme une poche en textile.

7. Dispositif de fixation selon la revendication 6, **caractérisé en ce que** la poche en textile est formée par un tube de textile qui entoure la courroie de tendeur (1) sur sa circonférence, le tube étant fermé à une seule extrémité ou aux deux extrémités, en particulier cousu.

8. Dispositif de fixation selon la revendication 7, **caractérisé en ce que** la courroie de tendeur (1) est passée à travers le tube à sa première extrémité (1.1) puis retournée par l'extérieur sur le tube en formant une boucle (3), dans laquelle l'oeillet (2) est reçu de façon imperdable, et fixée à cet endroit, en particulier cousue, sur le tube.

9. Dispositif de fixation selon les revendications 7 et 8, **caractérisé en ce que** le tube est fermé à l'extrémité tournée vers la première extrémité (1.1) des courroie de tendeur par une couture (4) qui fixe en même temps la courroie de tendeur (1) sur le tube par l'extérieur en formant la boucle (3).

10. Dispositif de fixation selon l'une des revendications 1 à 9, **caractérisé en ce que** le deuxième panneau de textile (7) à partir de la deuxième extrémité (1.2) de la courroie de tendeur (1) est plus long que le premier panneau de textile (6).

11. Dispositif de fixation selon l'une des revendications 1 à 10, **caractérisé en ce que** la courroie de tendeur (1) est munie d'un élément antidérapant en son milieu, entre la première extrémité (1.1) et la partie de la longueur située entre les deux panneaux de textile (6, 7), sur la surface tournée vers la jante dans la position d'utilisation conforme aux instructions du dispositif de fixation.

12. Dispositif de fixation selon l'une des revendications 7 à 11, **caractérisé en ce que** la poche présente un espace intérieur de logement pour le capteur de pression de pneu (10) sur la face de la courroie de tendeur (1) tournée vers la jante dans la position d'utilisation conforme aux instructions du dispositif de fixation.
